(19) Europäisches Patentamt
European Patent Office
Office européen des brevets

(11) **EP 3 696 595 B1**

(12) **FASCICULE DE BREVET EUROPEEN**

(45) Date de publication et mention
de la délivrance du brevet:
**21.12.2022 Bulletin 2022/51**

(21) Numéro de dépôt: **20155523.2**

(22) Date de dépôt: **05.02.2020**

(51) Classification Internationale des Brevets (IPC):
**G02B 27/01** *(2006.01)*    **G02B 27/00** *(2006.01)*
**G02B 27/14** *(2006.01)*

(52) Classification Coopérative des Brevets (CPC):
**G02B 27/0081; G02B 27/0172; G02B 27/148**

(54) **DISPOSITIF DE VISUALISATION COMPORTANT UN EXPANSEUR DE PUPILLE A DEUX MIROIRS**

ANZEIGEVORRICHTUNG, DIE EINEN PUPILLENEXPANDER MIT ZWEI SPIEGELN UMFASST

VIEWING DEVICE COMPRISING A PUPIL EXPANDER WITH TWO MIRRORS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.02.2019 FR 1901468**

(43) Date de publication de la demande:
**19.08.2020 Bulletin 2020/34**

(73) Titulaire: **Thales**
**92400 Courbevoie (FR)**

(72) Inventeurs:
• **DAMAMME, Natacha**
**33700 Merignac (FR)**
• **BARDON, Jean-Luc**
**33700 Merignac (FR)**
• **BOURGAIN, Jean-Louis**
**33700 Merignac (FR)**
• **CONI, Philippe**
**33700 Merignac (FR)**

(74) Mandataire: **Atout PI Laplace**
**Immeuble "Visium"**
**22, avenue Aristide Briand**
**94117 Arcueil Cedex (FR)**

(56) Documents cités:
**EP-A1- 2 733 517      WO-A1-2010/092409
US-A1- 2016 048 017**

**Description**

Le domaine technique général de l'invention est celui des systèmes de visualisation permettant une superposition d'une image générée par un dispositif de visualisation sur l'extérieur. Ces dispositifs sont utilisés dans différents domaines d'application. Ces dispositifs peuvent être fixés sur une structure telle un tableau de bord de véhicule ou une planche de bord aéronautique. On parle alors de dispositifs de visualisation « Tête Haute », connus aussi sous l'appellation « HUD », signifiant « Head-Up Display ». Ils peuvent être également montés sur un support porté par la tête de l'utilisateur. Ils sont connus sous la dénomination « HMD », signifiant « Helmet Mounted Display ».

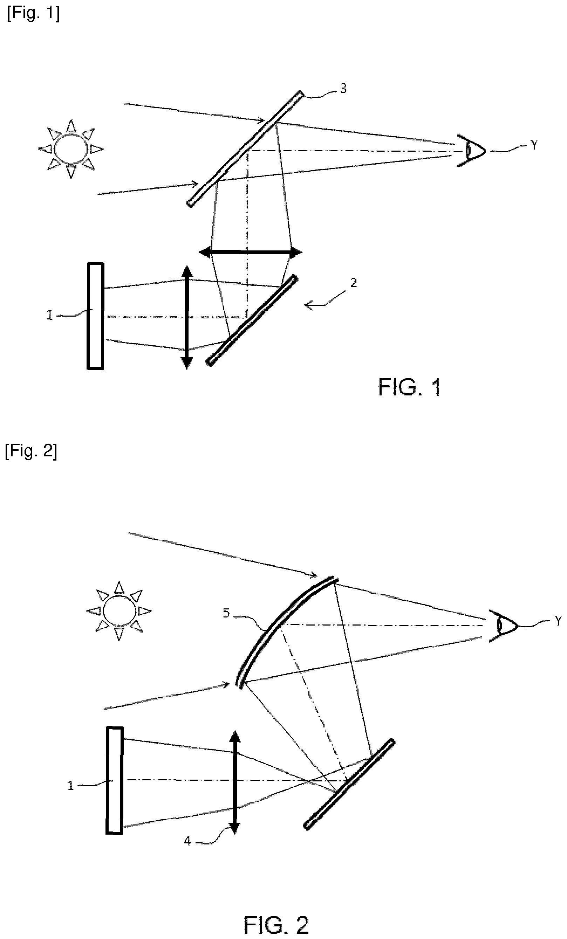

La figure 1 représente une première architecture permettant de réaliser ce type de système de visualisation. Sur cette figure et les suivantes, les composants optiques sont représentés en traits pleins gras et les rayons lumineux en traits fins ou en pointillés. Les optiques comportant des lentilles sont symbolisées par des flèches doubles. Le paysage extérieur est symbolisé par un soleil.

Cette première architecture comporte un afficheur 1, une optique de collimation coudée 2 et une lame plane semi-réfléchissante 3 placée dans le champ de vision d'un observateur Y. L'image générée par l'afficheur est envoyée à l'infini par l'optique de collimation. La lame semi-réfléchissante réfléchit, en partie, cette image vers l'observateur et transmet, en partie, le paysage extérieur. L'observateur voit donc, en superposition, l'image de l'afficheur sur le paysage extérieur. Cette solution a comme principal inconvénient que, par construction, l'œil de l'observateur est éloigné de la pupille du système. Le champ instantané d'observation est donc limité si l'on souhaite que le système conserve des dimensions et un poids raisonnable.

Le système de visualisation représenté en figure 2 n'a pas cet inconvénient. Il comporte un afficheur 1, une optique-relais 4 qui forme une image réelle de cet afficheur, un mélangeur optique 5 courbe semi-transparent qui forme de cette image réelle une image à l'infini. On démontre que cette combinaison optique permet de former une image de la pupille au niveau des yeux de l'observateur. La limitation précédente disparaît et le champ instantané d'observation n'est plus limité que par les dimensions du mélangeur optique. Cependant, cette solution a d'autres inconvénients. Le mélangeur optique est nécessairement un composant hors d'axe. La réalisation de l'optique-relais et du mélangeur est complexe à réaliser. Au final, on obtient un système complexe, coûteux et relativement encombrant.

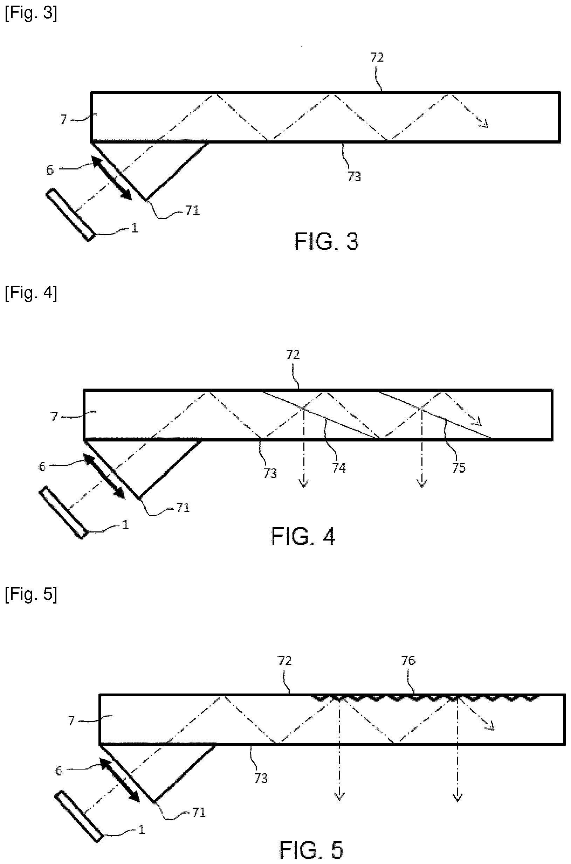

Pour pallier ces différents inconvénients, des systèmes dits à expansion de pupille ont été proposés. Ils sont parfois connus sous l'appellation « EPE », acronyme signifiant « Exit Pupil Expansion ». Le principe de fonctionnement d'un système EPE est représenté sur les figures 3 à 9. Un système de visualisation EPE comporte un afficheur 1, une optique de collimation 6 ayant une pupille de sortie et un guide de lumière 7 en matériau transparent à faces planes et parallèles. Les faisceaux de lumière collimatés par l'afficheur pénètrent par exemple dans le guide de lumière par une de ses faces latérales 71. L'entrée dans le guide peut se faire, comme dans le cas représenté, à l'aide d'un prisme, mais également avec un réseau, que l'on nomme alors réseau d'entrée

Ces faisceaux se propagent dans le guide de lumière par réflexions totales sur les faces parallèles 72 et 73 du guide comme on le voit sur la figure 3.

Pour que l'observateur puisse percevoir une image, il est nécessaire de la faire sortir du guide. Plusieurs solutions optiques existent. A titre de premier exemple, le guide de lumière du système EPE de la figure 4 comporte deux lames semi-réfléchissantes 74 et 75 parallèles disposées de façon à extraire une partie des faisceaux collimatés. A titre de second exemple, le guide de lumière de la figure 5 comporte un réseau 76 de microstructures ou de microprismes qui assure les mêmes fonctions. Enfin, le guide de lumière de la figure 6 comporte un réseau de diffraction 77 qui diffracte une partie de la lumière vers l'extérieur du guide dans la direction souhaitée. Sur cette figure 6, le réseau est situé sur une des deux faces du guide de lumière. Il peut également être situé à l'intérieur du guide.

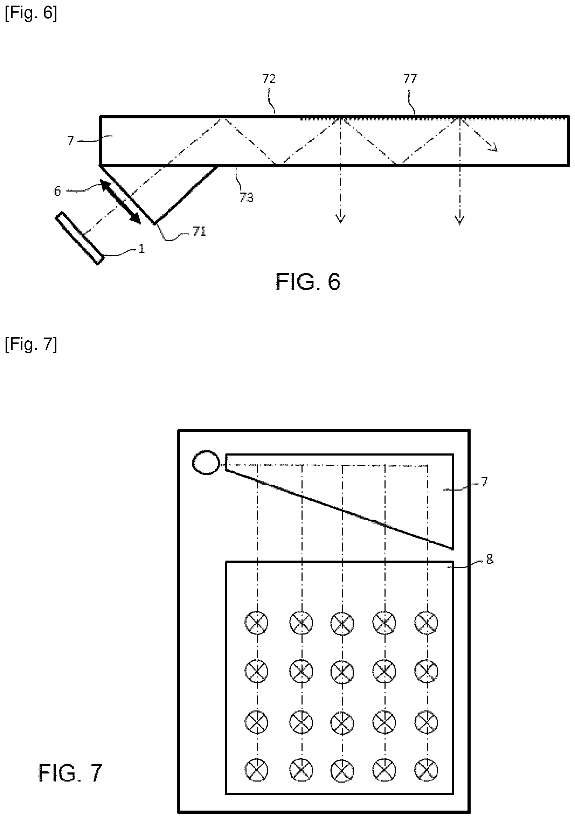

Les guides de lumière représentées sur les figures 4 à 6 permettent une extension de pupille dans une direction donnée. Pour étendre la pupille dans deux directions de l'espace, il est possible d'utiliser deux réseaux couplés 7 et 8 comme on le voit sur la figure 7 permettant d'étendre la pupille dans les deux dimensions de l'espace. Ces deux directions ne sont pas nécessairement normales l'une à l'autre. Sur cette figure 7, le premier réseau 7 permet d'étendre la pupille dans la dimension horizontale, et le second réseau 8 de l'étendre dans la direction verticale. Les croix cerclées indiquent que la lumière se propage dans un plan perpendiculaire à celui de la feuille.

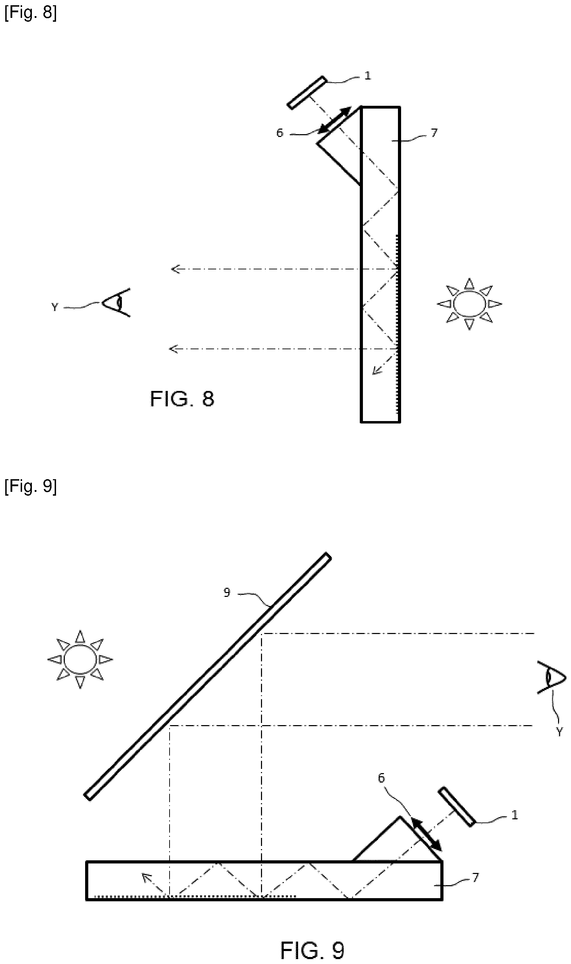

Les systèmes à expansion de pupille peuvent être disposés face à l'observateur, comme on le voit sur la figure 8. Dans ce cas, l'observateur Y regarde le paysage directement à travers le guide de lumière. On parle de systèmes « see-through ».

Les systèmes à expansion de pupille peuvent être également associés à un combineur optique comme on le voit sur la figure 9 où les faisceaux lumineux sont réfléchis vers l'observateur au moyen d'une lame semi-réfléchissante 9 qui assure la transmission du paysage extérieur.

Ces systèmes de visualisation présentent de nombreux avantages par rapport aux systèmes de visualisation classiques. Ils sont moins volumineux, plus légers, moins coûteux et plus facilement implantables sur une planche de bord ou un support de tête.

Ils ont cependant plusieurs inconvénients. Ces guides comportent nécessairement deux fonctions séparées, une première fonction de propagation de la lumière et une seconde fonction d'extraction de cette lumière. Les guides sont donc, par nature, complexes à réaliser. En particulier, les réseaux diffractifs présentent des difficultés de calcul et de réalisation.

Par ailleurs, le champ de visualisation ou « FOV », acronyme de « Field Of View » reste limité. Dans les systèmes comportant des réseaux diffractifs, la largeur spectrale de la source limite le FOV à environ 35 degrés. Les systèmes comportant des lames semi-réfléchissantes ou des micro-prismes sont limités par leurs géométries et ont aujourd'hui des FOV maximaux qui ne dépassent pas 40 degrés. Enfin, la qualité des systèmes à expansion de pupille couleur est encore limitée, et de ce fait les applications HUD aéronautiques sont aujourd'hui monochromes. Le document EP2 733 517 montre dispositif de visualisation de l'état de la technique permettant une extension bidimensionnelle de la pupille

Le système de visualisation à expansion de pupille selon l'invention ne présente pas les inconvénients précédents. Il comporte simplement un miroir et une lame semi-réfléchissante disposée en regard. Celle-ci est utilisée à la fois pour la propagation de la lumière et son extraction. Plus précisément, l'invention concerne un dispositif de visualisation comportant un ensemble optique comprenant un afficheur et un système optique formant de cet afficheur une image à l'infini, caractérisé en ce que le dispositif de visualisation comprend un guide de lumière à expansion de pupille comportant un miroir plan et une lame semi-réfléchissante parallèle au miroir plan, l'axe optique de l'ensemble optique étant incliné par rapport à la surface du miroir plan d'un angle différent de zéro et strictement inférieur à 90 degrés, les faisceaux lumineux issus de l'ensemble optique se propageant à l'intérieur du guide de lumière par réflexions successives sur le miroir plan et la lame semi-réfléchissante, la transmission des faisceaux lumineux issus de l'ensemble optique vers l'extérieur du guide de lumière se faisant par transmissions successives par la lame semi-réfléchissante.

Avantageusement, le guide de lumière comporte un ensemble constitué d'un premier miroir plan réfléchissant, d'un second miroir plan réfléchissant, d'un troisième miroir plan réfléchissant, d'une première lame plane semi-réfléchissante et d'une seconde lame plane semi-réfléchissante, la seconde lame étant dans le même plan et dans le prolongement du premier miroir, la seconde lame et le premier miroir étant parallèles au second miroir, la première lame étant parallèle au troisième miroir, la première lame et le troisième miroir étant perpendiculaires au premier miroir, la première lame étant située à la jonction du premier miroir et de la seconde lame, l'axe optique de l'ensemble optique étant incliné par rapport à la surface du premier miroir plan d'un angle différent de zéro et strictement inférieur à 90 degrés.

Avantageusement, le dispositif de visualisation comporte un mélangeur optique sans puissance optique disposé après le guide de lumière réfléchissant la lumière issue du guide de lumière et transmettant la lumière issue d'une source extérieure au dispositif.

Avantageusement, au moins une des lames semi-réfléchissantes a une transmission optique variable de façon que les faisceaux lumineux issus de l'ensemble optique transmis vers l'extérieur du guide de lumière par réflexions et transmissions successives à l'intérieur du guide de lumière aient sensiblement la même luminance globale.

Avantageusement, le mélangeur optique a une transmission optique variable.

Avantageusement, le champ du système optique est inférieur ou égal à 40 degrés sur au moins un de ses axes.

Avantageusement, l'angle d'inclinaison de l'axe optique est compris entre 50 degrés et 60 degrés.

Avantageusement, la distance séparant le miroir plan de la semi-réfléchissante est comprise entre 10 millimètres et 20 millimètres, le diamètre de la pupille d'entrée du dispositif de visualisation étant compris entre 15 millimètres et 25 millimètres.

Avantageusement, la distance séparant le premier miroir plan du second miroir plan est comprise entre 10 millimètres et 20 millimètres, la distance séparant le troisième miroir plan de la première lame semi-réfléchissante est comprise entre 10 millimètres et 20 millimètres, le diamètre de la pupille d'entrée du dispositif de visualisation étant compris entre 15 millimètres et 25 millimètres.

Avantageusement, pour toute inclinaison des faisceaux lumineux issus de l'ensemble optique, la séparation entre un faisceau se propageant dans le guide de lumière et le faisceau suivant ayant subi deux réflexions supplémentaires sur un miroir plan et la lame semi-réfléchissante qui lui est parallèle est inférieure à 1.5 millimètre.

Les dessins annexés illustrent l'invention :

[Fig.1] représente un premier dispositif de visualisation selon l'art antérieur ;

[Fig.2] représente un second dispositif de visualisation selon l'art antérieur ;

[Fig.3] représente le principe de la propagation de la lumière dans un dispositif de visualisation à expansion de pupille selon l'art antérieur ;

[Fig.4] représente un premier dispositif de visualisation à expansion de pupille selon l'art antérieur ;

[Fig.5] représente un second dispositif de visualisation à expansion de pupille selon l'art antérieur ;

[Fig.6] représente un troisième dispositif de visualisation à expansion de pupille selon l'art antérieur ;

[Fig.7] représente un dispositif de visualisation à expansion de pupille selon deux axes selon l'art antérieur ;

[Fig.8] représente une première utilisation d'un dispositif de visualisation à expansion de pupille selon l'art antérieur ;

[Fig.9] représente une seconde utilisation d'un dispositif de visualisation à expansion de pupille selon l'art antérieur ;

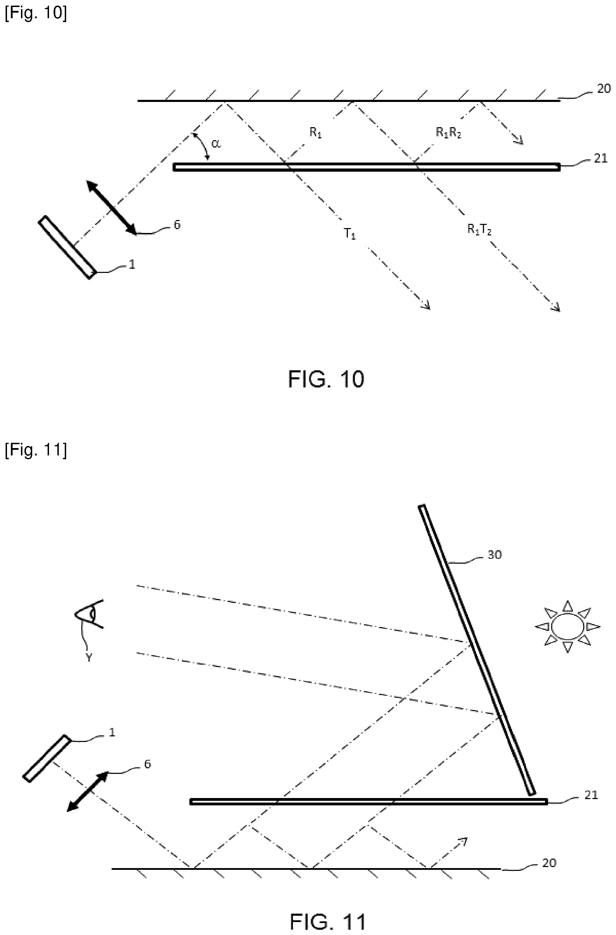

[Fig.10] représente le guide de lumière d'un dispositif de visualisation à expansion de pupille selon l'invention ;

[Fig.11] représente un dispositif de visualisation à expansion de pupille avec son combineur selon l'invention ;

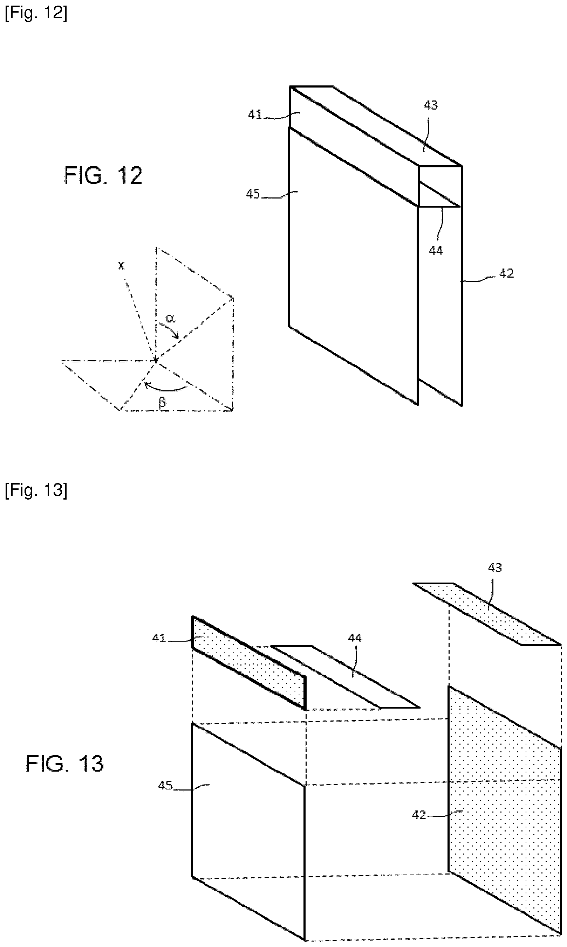

[Fig.12] représente le guide de lumière d'un dispositif de visualisation à expansion de pupille bidimensionnel selon l'invention ;

[Fig.13] représente un éclaté du guide de lumière précédent selon l'invention ;

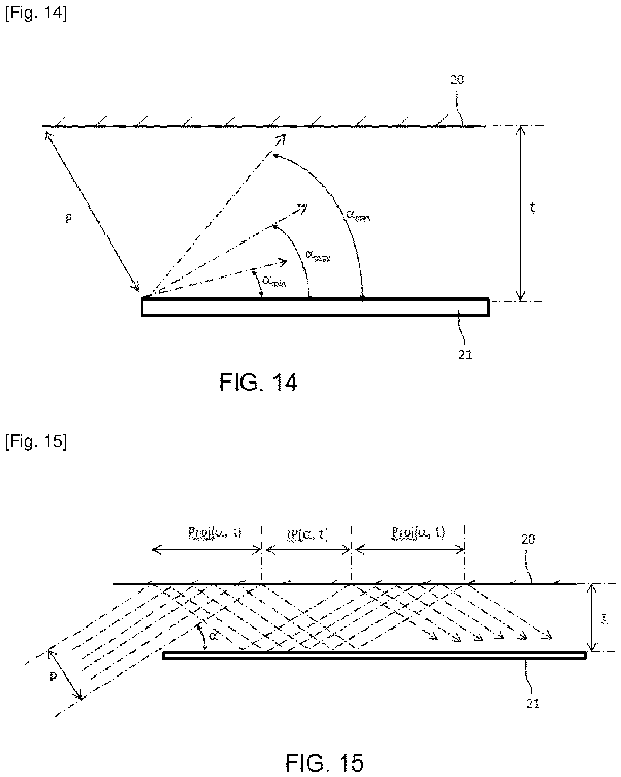

[Fig.14] représente les différentes incidences d'un guide de lumière selon l'invention ;

[Fig.15] représente les différents paramètres dans un guide de lumière selon l'invention ;

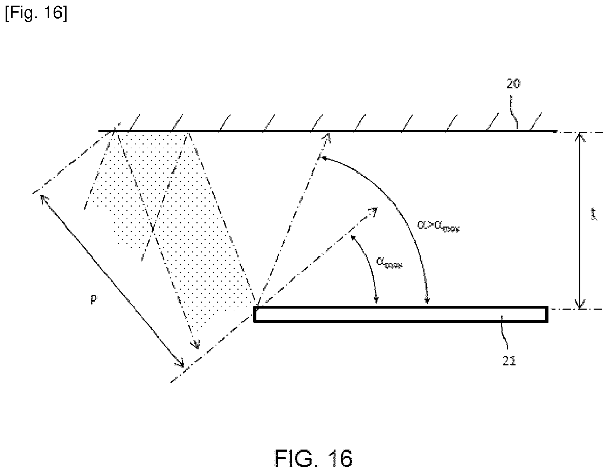

[Fig.16] représente l'occupation de la pupille dans un guide de lumière selon l'invention.

La figure 10 représente le principe d'un dispositif de visualisation à expansion de pupille selon l'invention. Dans le cas de la figure 10, l'expansion de pupille est réalisée dans une seule direction. Comme on le verra, il est possible de réaliser cette expansion dans deux directions différentes.

Ce dispositif de visualisation comporte un ensemble optique de collimation et un guide de lumière. L'ensemble optique comporte un afficheur 1 et un système optique 6 formant de cet afficheur une image à l'infini. L'afficheur peut être de toute nature. En particulier, le dispositif fonctionne avec tous types d'afficheur polychrome.

Le guide de lumière comporte un miroir plan 20 et une lame semi-réfléchissante 21 parallèle au miroir plan, l'axe optique de l'ensemble optique étant incliné par rapport à la surface du miroir plan d'un angle a.

Dans ce qui suit, on entend par lame semi-réfléchissante une lame optique en partie réfléchissante qui comporte un traitement qui transmet une partie d'une lumière incidente et qui réfléchit le reste de cette lumière incidente. Les parties réfléchie et transmise ne sont pas nécessairement égales.

L'angle a est nécessairement différent de zéro pour qu'il puisse y avoir réflexion des faisceaux lumineux entre le miroir et la lame semi-réfléchissante. Cet angle est également différent de 90 degrés de façon que les faisceaux puissent se propager sur une certaine distance sans atténuations excessives entre le miroir et la lame semi-réfléchissante.

Le fonctionnement du guide de lumière est le suivant. Un rayon lumineux d'incidence a issu de la pupille de l'ensemble optique de collimation est totalement réfléchi par le miroir. Il est ensuite partiellement transmis et partiellement réfléchi par la lame semi-réfléchissante. Le taux de réflexion local est $R_1$ et le taux de transmission local est $T_1$ avec $T_1$ sensiblement égal à $1 - R_1$. La partie réfléchie est de nouveau réfléchie par le miroir puis de nouveau transmise en partie par la lame semi-réfléchissante avec un taux de transmission local égal à $R_1.T_2$, soit $R_1.(1 - R_2)$.

Ainsi, à partir d'un rayon lumineux issu de la pupille, l'ensemble miroir-lame semi-réfléchissante génère une succession de rayons lumineux transmis parallèles entre eux et spatialement décalés dans une direction donnée. On obtient alors une succession d'images de la pupille de l'ensemble optique. En ajustant les valeurs locales du coefficient de réflexion de la lame semi-réfléchissante, les différents rayons lumineux transmis peuvent avoir des niveaux de luminance voisins.

Par rapport aux dispositifs de l'art antérieur, le guide d'onde selon l'invention a un avantage principal. La lame semi-réfléchissante est utilisée à la fois pour la propagation des faisceaux lumineux et son extraction, ce qui simplifie considérablement la réalisation du système.

Par nature, l'observateur ne peut pas voir à travers le guide de lumière selon l'invention. Aussi, comme on le voit sur la figure 11, le dispositif de visualisation comporte un mélangeur optique semi-transparent 30 sans puissance optique disposé après le guide de lumière. Ce combineur réfléchit la lumière issue du guide de lumière et transmet la lumière issue d'une source extérieure au dispositif. A titre d'exemple, le combineur représenté sur la figure 11 est une simple lame plane semi-réfléchissante. Ce combineur peut éventuellement avoir une transmission optique variable de façon à améliorer le contraste de l'image issue du dispositif de visualisation sur le paysage extérieur.

Le guide de lumière de la figure 10 permet l'expansion de pupille dans une direction donnée. Dans un grand nombre d'applications, il est nécessaire d'étendre la pupille dans deux directions de l'espace. Dans ce cas, le guide de lumière selon l'invention comporte un ensemble constitué de cinq éléments. A titre d'exemple de réalisation, un guide de ce type est représenté sur les figures 12 et 13. La figure 13 est un éclaté de la figure 12.

Ce guide bidimensionnel est composé d'un premier miroir plan réfléchissant 41, d'un second miroir plan réfléchissant 42, d'un troisième miroir plan réfléchissant 43, d'une première lame plane semi-réfléchissante 44 et d'une seconde lame plane semi-réfléchissante 45.

La seconde lame 45 est dans le même plan et dans le prolongement du premier miroir 41. La seconde lame 45 et le premier miroir 41 sont parallèles au second miroir 42. La première lame 44 est parallèle au troisième miroir 43. La première lame 44 et le troisième miroir 43 sont perpendiculaires au premier miroir 41. La première lame 44 est située à la jonction du premier miroir 41 et de la seconde lame 45.

L'axe optique x de l'ensemble optique est incliné par rapport à la surface du troisième miroir plan d'un premier angle a différent de zéro et strictement inférieur à 90 degrés et, par rapport au premier miroir plan d'un second angle β différent de zéro et strictement inférieur à 90 degrés. Ces angles sont représentés dans le trièdre de la figure 12.

Par définition du système, tous les rayons lumineux issus de l'ensemble optique impactent une première fois un couple d'éléments optiques adjacents, c'est à dire :

- soit le premier miroir 41 et le troisième miroir 43,

- soit le second miroir 42 et le troisième miroir 43,

- soit le premier miroir 41 et la première lame semi-réfléchissante 44,

- soit le second miroir 42 et la première lame semi-réfléchissante 44.

Après leur passage dans le guide de lumière, ces rayons lumineux sont transmis par la seconde lame semi-réfléchissante 45. On démontre que, dans chacun de ces quatre cas de figure, deux rayons lumineux ayant la même incidence d'entrée mais rencontrant chacun un premier élément qui peut être un miroir ou une lame semi-réfléchissante différent, sont transmis avec la même incidence de sortie par la seconde lame semi-réfléchissante indépendamment de leurs parcours dans le guide de lumière.

Par exemple, si les rayons lumineux issus de l'ensemble optique sont orientés vers le premier miroir 41 et la première lame semi-réfléchissante 44 avec un angle $(\alpha,\beta)$, alors quel que soit le premier élément 41 ou 44 impacté par un rayon, ce dernier ressortira du système par la lame semi-réfléchissante 45 avec un angle $(\alpha,\beta)$.

Les guides de lumière à expansion de pupille monodimensionnel ou bidimensionnel selon l'invention sont composés de miroirs plans et de lames semi-réfléchissantes. Ils ne posent pas de difficultés de réalisation particulières pour l'homme du métier, l'écartement entre les lames semi-réfléchissantes et les miroirs qui leur font face peut être réalisé au moyen de cales optiques de grande précision.

Les principales caractéristiques géométriques d'un dispositif de visualisation comportant un guide de lumière selon l'invention sont, selon l'une de ses directions d'expansion :

- La pupille d'entrée de diamètre P ;

- Le champ de visualisation noté FOV. Dans le cas présent, l'angle d'inclinaison a peut varier entre un angle minimum $\alpha_{min}$ et un angle maximum $\alpha_{max}$. La différence entre ces deux angles d'inclinaison donne la valeur angulaire du champ de visualisation dans une direction. Dans la suite, on notera $\alpha_{moy}$ l'angle d'inclinaison correspondant à la moyenne des deux angles précédents. Cet angle détermine l'inclinaison de l'axe optique de l'ensemble optique par rapport au guide de lumière ;

- La longueur et la largeur du guide de lumière. Elles sont imposées par la dimension de pupille de sortie souhaitée ;

- L'épaisseur t du guide lumière ;

- La largeur IP des zones aveugles du guide de lumière. Ces zones sont telles que, pour un champ donné, elles ne transmettent pas de lumière.

Ces différents paramètres sont représentés sur les figures 14 à 16 qui représentent trois vues en coupe partielles d'un guide de lumière au niveau de sa jonction avec l'ensemble optique. Ce guide comporte le miroir 20 et la lame semi-réfléchissante 21.

Les différents paramètres sont soumis à des contraintes physiques et/ou géométriques. La première contrainte porte sur la taille de la pupille d'entréeP. Cette taille de pupille P est contrainte par l'ouverture maximale de l'optique de collimation.

A titre d'exemple, on peut considérer que, pour un imageur de 0,7 pouce de diagonale et une ouverture numérique inférieur à f/0.9, le diamètre maximal de la pupille est de 21 millimètres.

Dans le cas où le système de visualisation est un HUD, la luminance maximale en sortie, au niveau de l'œil de l'utilisateur, doit être élevée, de l'ordre de 7000 Cd/m$^2$ de façon à percevoir avec un bon contraste l'image issue de l'afficheur sur un fond très lumineux.

Or, la luminance de sortie est inversement proportionnelle au ratio entre la surface de la pupille de sortie du système et la surface de la pupille d'entrée ou plus précisément la projection de la pupille d'entrée sur les surfaces du guide. Plus ce ratio est élevé, plus, pour une luminance d'entrée donnée, la luminance de sortie est faible. De manière à diminuer ce ratio, et compte tenu de la luminance élevée demandée en sortie du système, il est donc préférable de choisir une pupille d'entrée la plus grande possible. Dans le cas présent, un diamètre de 21 millimètres est un bon compromis.

Comme on le voit sur la figure 15, on note Proj(a,t) la projection de la pupille d'entrée en fonction du champ a et de l'épaisseur t et IP(a,t) la distance entre deux projections successives de la pupille issue des deux réflexions successives entre le miroir et la lame semi-réfléchissante.

Pour une valeur élevée de champ a, une partie des rayons ne se propagent pas dans le guide. La projection Proj(a,t) est en partie occultée, comme on peut le voir sur la figure 16. Ainsi, la partie des rayons d'incidence a représentée par la zone en pointillés sur cette figure n'entre pas dans le guide de lumière.

Or, il est important que la projection de la pupille, pour tous les champs, soit supérieure à une taille minimale Proj$_{min}$ pour diminuer le ratio pupille de sortie sur pupille d'entrée et obtenir suffisamment de luminance en sortie. Cela signifie que l'on va contraindre le champ maximal $\alpha_{max}$ que l'on injecte.

A titre d'exemple de détermination de cette taille minimale Proj$_{min}$ et donc du champ maximal $\alpha_{max}$, on considère que la pupille de sortie du guide est un rectangle de 30 centimètres par 20 centimètres, soit une surface Pout couverte de 600 cm$^2$. On souhaite que la luminance Lout dans cette pupille de sortie soit de 7000 Cd/m$^2$. La luminance Lin de l'image, à l'entrée du guide de lumière, est de l'ordre de 5.10$^6$ Cd/m$^2$. Enfin, la transmission T de l'ensemble du système, compte-tenu des pertes dans le guide et de la transmission du combineur, vaut 70 %. Alors, la surface minimale de la pupille d'entrée Pin vaut :

$$Pin = T.Pout.\frac{Lout}{Lin}$$

Avec les valeurs indiquées, cette surface vaut 1.2 cm$^2$, soit un diamètre d'environ 1.2 centimètre.

Géométriquement on a la relation :

$$\alpha_{max} = \operatorname{atan}\frac{2t}{\text{Proj}(\alpha_{max})} = \operatorname{atan}\frac{2t}{Proj_{min}}$$

Les projections de la pupille, pour tous les champs a, doivent être espacées d'une valeur IP($\alpha$,t) inférieure à une valeur maximale IP$_{max}$. Cette valeur maximale IP$_{max}$ est fixée à 1,5 mm, correspondant à la moitié de la taille minimale de la pupille de l'œil lorsque celle-ci est soumise à un fort éclairement.

Or, géométriquement, on a tan $\alpha = \dfrac{2t}{(\text{P}(\alpha)+\text{IP}(\alpha))}$

IPmax contraint le champ minimal $\alpha_{min}$ que l'on peut injecter dans le guide de lumière.

On a donc tan $\alpha_{min} = \dfrac{2t}{\text{Proj}(\alpha_{min})+\text{IP}_{max}}$ or Proj($\alpha_{min}$) = P/ cos $\alpha_{min}$

Donc tan $\alpha_{min} = \dfrac{2t}{\text{P/}\cos\alpha_{min}+\text{IP}_{max}}$

Compte-tenu de ces différentes contraintes, on détermine le champ maximal injectable dans le guide. En d'autres termes, on cherche t tel que :

$$FOV(t) = \alpha_{max}(t) - \alpha_{min}(t) \text{ soit maximal,}$$

$$\text{avec Proj}_{min} \text{ vérifiant : } \alpha_{max}(t) = \text{atan}\frac{2t}{\text{Proj}_{min}}$$

$$\text{tout en sachant que } \tan\alpha_{min} = \frac{2t}{P/\cos\alpha_{min} + IP_{max}} \qquad \text{(Equation 1)}$$

On cherche donc $\alpha_{min}$ maximisant le champ $FOV(\alpha_{min})$.

Si l'on pose x = cos $\alpha_{min}$, alors on démontre que, si $\alpha_{min}$ maximise $FOV(\alpha_{min})$, alors x vérifie l'équation :

$$(Proj_{min}^2 - IP_{max}^2).x^4 + (Proj_{min} - 2.IP_{max}).P.x^3 + (IP_{max}^2 - Proj_{min}^2 -$$

$$Proj_{min}.IP_{max}).x^2 + 2.(IP_{max} - Proj_{min} + P)^2 = 0$$

Si l'on choisit $Proj_{min}$ = 12 mm, $IP_{max}$ = 1.5 mm et P = 21 mm, on trouve que x ~ 0.7 et donc que le FOV est maximum pour $\alpha_{min}$ = 45°.

On en déduit, en utilisant l'équation (1) que le FOV est maximum pour t = 15,7 mm et $\alpha_{max}$ = 69° et donc max(FOV(t)) = 24°.

Si l'on choisit $Proj_{min}$ = 5 mm, les autres valeurs étant inchangées, alors max(FOV(t)) = 36°.

On a ainsi déterminé, avec les paramètres précédents la distance t nécessaire pour injecter le maximum de champ, ainsi que les angles minimal et maximal de champ injectable dans le guide de lumière.

Une approche identique permet de déterminer la distance entre les deux autres miroirs dans l'autre dimension de l'espace lorsque le guide de lumière est bidimensionnel.

La longueur et la largeur des miroirs et des lames semi-réfléchissantes sont dimensionnées par la taille de la boite à œil souhaitée en sortie de guide de lumière et par l'eye relief, c'est-à-dire la distance optique entre la sortie du guide de lumière et l'œil de l'utilisateur.

Une modélisation du système avec, par exemple, un logiciel de simulation optique permet alors de retrouver la taille exacte de la pupille de sortie du système, et donc la taille de guide de lumière nécessaire pour obtenir cette pupille de sortie.

Les différents paramètres géométriques du dispositif de visualisation selon l'invention étant définis, il est alors facile, avec un logiciel de simulation optique, de déterminer le taux de transmission des lames semi-réfléchissantes permettant d'obtenir la meilleure uniformité de luminance dans la boite à œil.

## Revendications

1. Dispositif de visualisation comportant un ensemble optique comprenant un afficheur (1) et un système optique formant de cet afficheur une image à l'infini, le dispositif de visualisation comprenant un guide de lumière à expansion de pupille agencé de façon à étendre une pupille dans deux directions de l'espace, **caractérisé en ce que** ledit guide de lumière comporte un ensemble optique constitué d'un premier miroir plan réfléchissant (41), d'un second miroir plan réfléchissant (42), d'un troisième miroir plan réfléchissant (43), d'une première lame plane semi-réfléchissante (44) et d'une seconde lame plane semi-réfléchissante (45), la seconde lame étant dans le même plan et dans le prolongement du premier miroir, la seconde lame et le premier miroir étant parallèles au second miroir, la première lame étant parallèle au troisième miroir, la première lame et le troisième miroir étant perpendiculaires au premier miroir, la première lame étant située à la jonction du premier miroir et de la seconde lame, l'axe optique de l'ensemble optique étant incliné par rapport à la surface du premier miroir plan d'un angle différent de zéro et strictement inférieur à 90 degrés, les faisceaux lumineux issus de l'ensemble optique se propageant à l'intérieur du guide de lumière par réflexions successives sur les miroirs plans et les lames semi-réfléchissantes, la transmission des faisceaux lumineux issus de l'ensemble optique vers l'extérieur du guide de lumière se faisant par transmissions successives par la seconde lame semi-réfléchissante (45).

2. Dispositif de visualisation selon la revendication 1, **caractérisé en ce que** le dispositif de visualisation comporte un mélangeur optique (30) sans puissance optique disposé après le guide de lumière réfléchissant la lumière issue du guide de lumière et transmettant la lumière issue d'une source extérieure au dispositif.

**3.** Dispositif de visualisation selon l'une des revendications précédentes, **caractérisé en ce qu'**au moins une des lames semi-réfléchissantes a une transmission optique variable de façon que les faisceaux lumineux issus de l'ensemble optique transmis vers l'extérieur du guide de lumière par réflexions et transmissions successives à l'intérieur du guide de lumière aient sensiblement la même luminance globale.

**4.** Dispositif de visualisation selon l'une des revendications 2 ou 3, **caractérisé en ce que** le mélangeur optique a une transmission optique variable.

**5.** Dispositif de visualisation selon l'une des revendications précédentes, **caractérisé en ce que** le champ du système optique est inférieur ou égal à 40 degrés sur au moins un de ses axes.

**6.** Dispositif de visualisation selon l'une des revendications précédentes, **caractérisé en ce que** l'angle d'inclinaison de l'axe optique est compris entre 50 degrés et 60 degrés.

**7.** Dispositif de visualisation selon l'une des revendications précédentes, **caractérisé en ce que** la distance séparant le premier miroir plan du second miroir plan est comprise entre 10 millimètres et 20 millimètres, la distance séparant le troisième miroir plan de la première lame semi-réfléchissante est comprise entre 10 millimètres et 20 millimètres, le diamètre de la pupille d'entrée du dispositif de visualisation étant compris entre 15 millimètres et 25 millimètres.

**8.** Dispositif de visualisation selon l'une des revendications précédentes, **caractérisé en ce que**, pour toute inclinaison des faisceaux lumineux issus de l'ensemble optique, la séparation entre un faisceau se propageant dans le guide de lumière et le faisceau suivant ayant subi deux réflexions supplémentaires sur un miroir plan et la lame semi-réfléchissante qui lui est parallèle est inférieure à 1.5 millimètre.

## Patentansprüche

**1.** Anzeigevorrichtung, die eine optische Anordnung aufweist, die ein Anzeigegerät (1) und ein optisches System umfasst, das aus diesem Anzeigegerät ein Bild ins Unendliche bildet, wobei die Anzeigevorrichtung einen Pupillen erweiternden Lichtleiter umfasst, der derart angeordnet ist, dass er eine Pupille in zwei Richtungen im Raum erweitert, **dadurch gekennzeichnet, dass** der Lichtleiter eine optische Anordnung aufweist, die aus einem ersten planaren reflektierenden Spiegel (41), einem zweiten planaren reflektierenden Spiegel (42), einem dritten planaren reflektierenden Spiegel (43), einer ersten planaren, halb-reflektierenden Platte (44) und einer zweiten planaren, halb-reflektierenden Platte (45) aufgebaut ist, wobei sich die zweite Platte in derselben Ebene und in der Verlängerung des ersten Spiegels befindet, wobei die zweite Platte und der erste Spiegel parallel zum zweiten Spiegel sind, wobei die erste Platte parallel zum dritten Spiegel ist, wobei die erste Platte und der dritte Spiegel senkrecht zum ersten Spiegel sind, wobei sich die erste Platte an der Verbindungsstelle zwischen dem ersten Spiegel und der zweiten Platte befindet, wobei die optische Achse der optischen Anordnung in Bezug auf die Oberfläche des ersten planaren Spiegels um einen Winkel geneigt ist, der von Null verschieden und strikt kleiner als 90 Grad ist, wobei sich die aus der optischen Anordnung austretenden Lichtstrahlen in das Innere des Lichtleiters durch aufeinanderfolgende Reflexionen auf den planaren Spiegeln und den halb-reflektierenden Platten ausbreiten, wobei die Übertragung der aus der optischen Anordnung zum Äußeren des Lichtleiters austretenden Lichtstrahlen durch aufeinanderfolgende Übertragungen durch die zweite, halb-reflektierende Platte (45) erfolgt.

**2.** Anzeigevorrichtung nach Anspruch 1, **dadurch gekennzeichnet, dass** die Anzeigevorrichtung einen optischen Mischer (30) ohne optische Leistung umfasst, der nach dem Lichtleiter angeordnet ist, der das aus dem Lichtleiter austretende Licht reflektiert und das aus einer außerhalb der Vorrichtung gelegenen Quelle austretende Licht überträgt.

**3.** Anzeigevorrichtung nach einem der vorhergehenden Ansprüche, **dadurch gekennzeichnet, dass** mindestens eine der halb-reflektierenden Platten derart eine variable optische Übertragung aufweist, dass die aus der optischen Anordnung austretenden Lichtstrahlen, die zum Äußeren des Lichtleiters durch aufeinanderfolgende Reflexionen und Übertragungen ins Innere des Lichtleiters übertragen werden, im Wesentlichen die gleiche insgesamte Leuchtdichte aufweisen.

**4.** Anzeigevorrichtung nach einem der Ansprüche 2 oder 3, **dadurch gekennzeichnet, dass** der optische Mischer eine variable optische Übertragung aufweist.

**5.** Anzeigevorrichtung nach einem der vorhergehenden Ansprüche, **dadurch gekennzeichnet, dass** das Feld des optischen Systems kleiner oder gleich 40 Grad auf mindestens einer seiner Achsen beträgt.

**6.** Anzeigevorrichtung nach einem der vorhergehenden Ansprüche, **dadurch gekennzeichnet, dass** der Neigungswinkel der optischen Achse zwischen 50 Grad und 60 Grad liegt.

**7.** Anzeigevorrichtung nach einem der vorhergehenden Ansprüche, **dadurch gekennzeichnet, dass** der Abstand, der den ersten planaren Spiegel vom zweiten planaren Spiegel trennt, zwischen 10 Millimetern und 20 Millimetern beträgt, der Abstand, der den dritten planaren Spiegel von der ersten, halb-reflektierenden Platte trennt, zwischen 10 Millimetern und 20 Millimetern beträgt, der Durchmesser der Eintrittspupille der Anzeigevorrichtung zwischen 15 Millimetern und 25 Millimetern beträgt.

**8.** Anzeigevorrichtung nach einem der vorhergehenden Ansprüche, **dadurch gekennzeichnet, dass** für jede Neigung der aus der optischen Anordnung austretenden Lichtstrahlen die Trennung zwischen einem sich in dem Lichtleiter ausbreitenden Lichtstrahl und dem folgenden Lichtstrahl, der zwei zusätzlichen Reflexionen auf einem planaren Spiegel und der halb-reflektierenden Platte, die wiederum parallel ist, unterzogen wurde, weniger als 1,5 Millimeter beträgt.

**Claims**

**1.** A viewing device having an optical assembly comprising a display (1) and an optical system forming an image of this display at infinity, the viewing device comprising a pupil-expansion light guide arranged so as to extend a pupil in two spatial directions, **characterised in that** said light guide has an optical assembly consisting of a first reflective planar mirror (41), of a second reflective planar mirror (42), of a third reflective planar mirror (43), of a first semi-reflective planar plate (44) and of a second semi-reflective planar plate (45), the second plate being in the same plane and in the extension of the first mirror, the second plate and the first mirror being parallel to the second mirror, the first plate being parallel to the third mirror, the first plate and the third mirror being perpendicular to the first mirror, the first plate being located at the junction of the first mirror and of the second plate, the optical axis of the optical assembly being inclined with respect to the surface of the first planar mirror by an angle different from zero and strictly smaller than 90 degrees, the light beams output from the optical assembly propagating inside the light guide via successive reflections off the planar mirrors and the semi-reflective plates, the transmission of the light beams output from the optical assembly towards the outside of the light guide occurring via successive transmissions by the second semi-reflective plate (45).

**2.** The viewing device according to claim 1, **characterised in that** the viewing device has an optical mixer (30) with no optical power that is placed after the light guide, reflecting the light output from the light guide and transmitting the light output from a source which is exterior to the device.

**3.** The viewing device according to one of the preceding claims, **characterised in that** at least one of the semi-reflective plates has a variable optical transmission, so that the light beams output from the optical assembly which are transmitted towards the outside of the light guide by successive transmissions and reflections inside the light guide have substantially the same overall luminance.

**4.** The viewing device according to one of claim 2 or 3, **characterised in that** the optical mixer has a variable optical transmission.

**5.** The viewing device according to one of the preceding claims, **characterised in that** the field of the optical system is smaller than or equal to 40 degrees on at least one of its axes.

**6.** The viewing device according to one of the preceding claims, **characterised in that** the angle of inclination of the optical axis is between 50 degrees and 60 degrees.

**7.** The viewing device according to one of the preceding claims, **characterised in that** the distance separating the first planar mirror from the second planar mirror is between 10 millimetres and 20 millimetres, the distance separating the third planar mirror from the first semi-reflective plate is between 10 millimetres and 20 millimetres, the diameter of the entrance pupil of the viewing device being between 15 millimetres and 25 millimetres.

8. The viewing device according to one of the preceding claims, **characterised in that**, for any inclination of the light beams output from the optical assembly, the separation between a beam propagating inside the light guide and the following beam, which has undergone two additional reflections off a planar mirror and off the semi-reflective plate that is parallel thereto, is smaller than 1.5 millimetres.

[Fig. 1]

FIG. 1

[Fig. 2]

FIG. 2

[Fig. 3]

FIG. 3

[Fig. 4]

FIG. 4

[Fig. 5]

FIG. 5

[Fig. 6]

FIG. 6

[Fig. 7]

FIG. 7

[Fig. 8]

FIG. 8

[Fig. 9]

FIG. 9

[Fig. 10]

FIG. 10

[Fig. 11]

FIG. 11

[Fig. 12]

FIG. 12

[Fig. 13]

FIG. 13

[Fig. 14]

FIG. 14

[Fig. 15]

FIG. 15

EP 3 696 595 B1

[Fig. 16]

FIG. 16

18

**RÉFÉRENCES CITÉES DANS LA DESCRIPTION**

**Documents brevets cités dans la description**

- EP 2733517 A